# EUROPÄISCHE PATENTSCHRIFT

(11) **EP 0 872 675 B1**
(45) Veröffentlichungstag und Bekanntmachung des Hinweises auf die Patenterteilung: **18.12.2002**
(21) Anmeldenummer: 98106578.2
(22) Anmeldetag: 09.04.1998
(51) Int. Cl.: F16K 31/10, F16K 31/06, F16K 1/12

(54) **Linearventil**
Straight flow valve
Clapet à flux direct

(30) Priorität: 14.04.1997 DE 29706688 U
(43) Veröffentlichungstag der Anmeldung: 21.10.1998
(73) Patentinhaber: Bürkert Werke GmbH & Co., D-74653 Ingelfingen (DE)
(72) Erfinder: Hettinger, Gerhard, D-74653 Ingelfingen (DE)
(74) Vertreter: Degwert, Hartmut, Dipl.-Phys.

(56) Entgegenhaltungen:
- DE-C- 951 691
- FR-A- 2 273 215
- US-A- 2 622 622
- US-A- 3 284 044
- US-A- 3 784 156

## Beschreibung

Die Erfindung betrifft ein direktwirkendes druckentlastetes Linearventil gemäß Oberbegriff von Anspruch 1.

Bei bekannten Linearventilen dieser Art ist ein direktwirkender Magnetantrieb oder ein durch Fremdmedium betätigter Kolbenantrieb rotationssymmetrisch um das im Medium verschiebbare Abdichtungsrohr angeordnet. Dadurch ist bei der rotationssymmetrischen Anordnung für jede Nennweite eine individuelle elektrische oder pneumatische Antriebseinheit erforderlich. Bei der Wartung oder bei einer Reparatur an der Antriebseinheit muß das Linearventil vollständig aus dem Mediumskreislauf ausgebaut werden, um den elektrischen bzw. Kolbenantrieb auszutauschen. Eine Wartung oder Reparatur an der Antriebseinheit eines Linearventils führt demzufolge zu langen Stillstandszeiten der gesamten Anlage.

Durch die Erfindung wird ein Linearventil geschaffen, bei welchem die magnetische, pneumatische oder elektromotorische Antriebskomponente außerhalb des Medienstroms angeordnet ist und insbesondere über Hebel oder Kniehebel eine Übersetzung erzeugt, die es ermöglicht, mit geringeren elektrischen oder pneumatisch erzeugten Antriebskräften auszukommen. Eine Antriebskomponente läßt sich daher für mehrere Nennweiten verwenden. Ferner kann die Antriebseinheit ohne Eingriff in den fluidischen Teil des Linearventils in kurzer Zeit getauscht bzw. ersetzt werden, z. B. sind handbetätigte, elektromagnetische, pneumatische, elektromotorische Antriebsmodule anbaubar. Ferner ist erfindungsgemäß der Umbau der Ventilfunktion von stromlos/drucklos geschlossen in stromlos/drucklos offen elektrisch-pneumatisch im Leitungsnetz möglich.

Als besonders günstig hat sich ferner erwiesen, daß das fluidische Gehäuse des Linearventils an seiner Unterseite eine nach außen durchgehende Drainagebohrung erhält, an der z. B. eine Undichtheit der Dichtungen direkt zu sehen ist. Darüber hinaus sind an diese Drainagebohrung modular unterschiedliche Sensorelemente anschließbar, z. B. zur Stellungsrückmeldung des Abdichtrohres, Leckageanzeige oder Durchflußanzeige.

In einer bevorzugten Ausführungsform für Linearventile mit kleinen Nennweiten von 4 bis 10 mm wird die Antriebseinheit mit einem Klappanker ausgestattet, der einseitig radial neben dem Fluidgehäuse vorzugsweise angeflanscht ist und über einen mit einem Zahnsegment versehenen Verlängerungshebel in ein Zahnsegment auf dem Abdichtungsrohr formschlüssig eingreift. Aufgrund der vorgeschlagenen Anordnung kann die Antriebseinheit auf einfache Weise ohne Eingriff in den Fluidteil abgenommen werden.

Ferner ist bei der erfindungsgemäßen Anordnung des Linearantriebs berücksichtigt, daß zwischen dem Fluidraum des Linearventils und dem Ankerraum des Magneten ein durch Dichtungen getrennter und zur Atmosphäre offener Zwischenraum besteht, der verhindert, daß bei einer Undichtheit an einer der beiden Nutringdichtungen Medium in den Ankerraum eindringt. Diese Maßnahme ist vor allem bei Linearventilen von Vorteil, die zur Steuerung von Flüssigkeiten verwendet werden, insbesondere bei Linearventilen, die für aggressive Medien zum Einsatz kommen, wobei zum zusätzlichen Schutz des Ankerraums der Antrieb vorzugsweise oberhalb des Fluidgehäuses angebracht ist.

Mit dem erfindungsgemäßen Linearventil ist es möglich, die Verschiebekraft für das Abdichtungsrohr niedrig zu halten. Zu diesem Zweck sind die über Differenzflächen entstehenden Gegenkräfte zu minimieren. Dies wird erfindungsgemäß dadurch erreicht, daß als Abdichtungsrohr ein sehr dünnwandiges Metall- oder Kunststoffrohr dient, an das der Sitz angedreht ist.

Eine weitere Verbesserung bei der Minimierung der Verschiebekräfte erreicht man durch den Einsatz von Lippendichtungen für die Abdichtungsstellen am Abdichtungsrohr, die zu diesem Zweck ein vorgegebenes Profil erhalten und in optimierter Weise eingespannt werden.

Die Reduzierung der Reibungskräfte an den Dichtungen und an der Differenzfläche des Abdichtungsrohres auf ein Minimum bringt gegenüber bekannten Konstruktionen den großen Vorteil, daß gleiche fluidische Leistungen mit geringeren Antriebsleistungen, d. h. kleineren elektromagnetischen motorischen oder kolbengetriebenen Antrieben gesteuert werden können.

Im Weiterbildung der Erfindung ist ferner vorgesehen, die Bewegung des Abdichtungsrohres auf einfache Art zu dämpfen. Diese Dämpfung wird dadurch erreicht, daß das Linearventil in einer ersten Bewegungsphase bis auf einen verbleibenden kleinen Spalt sehr schnell öffnet/schließt und danach in einer zweiten Bewegungsphase durch die Wirkung einer Endlagendämpfung die Bewegung bis zum vollständigen Schließen langsam abläuft.

Aufgrund der vorgeschlagenen Anordnung läßt sich der fluidische Teil des Linearventils unter Verwendung unterschiedlicher Gehäuse-, Rohr-, Dichtungs- und Anschlußmaterialien für ein breites Medienspektrum verwenden. In metallischer Ausführung mit Gehäuse und Anschlußteilen aus Messing und einem Abdichtungsrohr aus Stahl lassen sich alle bekannten Steuerungsaufgaben mit neutralen Medien, wie z. B. Wasser oder Dampf, mit Hilfe von Linearventilen in 2/2- und 3/2-Wege-Ausführungen abdecken. Dieselbe Konstruktion mit Bauteilen aus nichtrostendem Stahl eignet sich besonders für Analysen- und Medizintechnik sowie in den Bereichen Lebensmitteltechnik und Pharmazie. Mit Gehäuse und Anschlußteilen sowie Abdichtungsrohr aus Kunststoffen wie PVC, PVDF, Peek kommt die Ausführung für alle aggressiven Medien in den Bereichen Abwasseraufbereitung, chemische Industrie usw. in Betracht. In diesem Fall sind alle mit den Medien in Berührung kommenden Teile säurefest, wobei alle Metallteile durch einen entlüfteten Zwischenraum und doppelte Abdichtungen geschützt sind.

Eine weitere Ausführungsform, die sich insbesondere für große Nennweiten eignet, unterscheidet sich im wesentlichen von der vorher beschriebenen Ausführungsform dadurch, daß an die Stelle eines Klappankers ein Hubanker-Magnet bzw. Motor- oder Kolbenantrieb tritt. Auch in diesem Fall läßt sich die Antriebseinheit vorteilhaft vom Fluidteil trennen, ohne in den Fluidkreislauf einzugreifen. Die Kraftwirkung des Magneten, des Motors oder des Kolbenantriebs wird vorzugsweise über ein Zahnsegment auf eine Zahnstange am Abdichtungsrohr übertragen.

Um die wegabhängige Kraft eines Elektromagneten optimal zu nutzen, ist als Zwischenelement zwischen Magnetanker und Abdichtungsrohr ein Kniehebel eingebaut, der die geringe Kraft des abgefallenen Ankers in eine maximale Schließ- und Zuhaltekraft übersetzt. Die Hub-Kraft-Kennlinie des Magneten wird durch die entgegengesetzte Weg-Kraft-Kennlinie des Kniehebels in der Schließphase derart übersetzt, daß sich mit kleineren Aktuatoren höhere Leistungen und dadurch bessere Zuhaltekräfte schalten lassen. Dies wirkt sich vor allem bei größeren Nennweiten positiv aus, da hier durch größere Abmessungen im fluidischen Teil größere Verluste durch Reibung entstehen als bei kleineren Nennweiten.

Die Erfindung ist anhand von zwei in den anliegenden Zeichnungen dargestellten bevorzugten Ausführungsbeispielen in der nachstehenden Beschreibung näher erläutert. Es zeigen:
Figur 1 einen schematischen Schnitt durch ein Linearventil mit einem Klappanker und einer Zahnstange, die zum Steuern der Bewegung des Abdichtrohres in ein Zahnsegment an diesem eingreift,
Figur 2 einen schematischen Schnitt durch ein Linearventil mit einer Zahnstange und einem Zahnsegment zur Steuerung der Bewegung des Abdichtrohres, mit einem Kniehebel zur Übersetzung und Verstärkung der Antriebskraft.

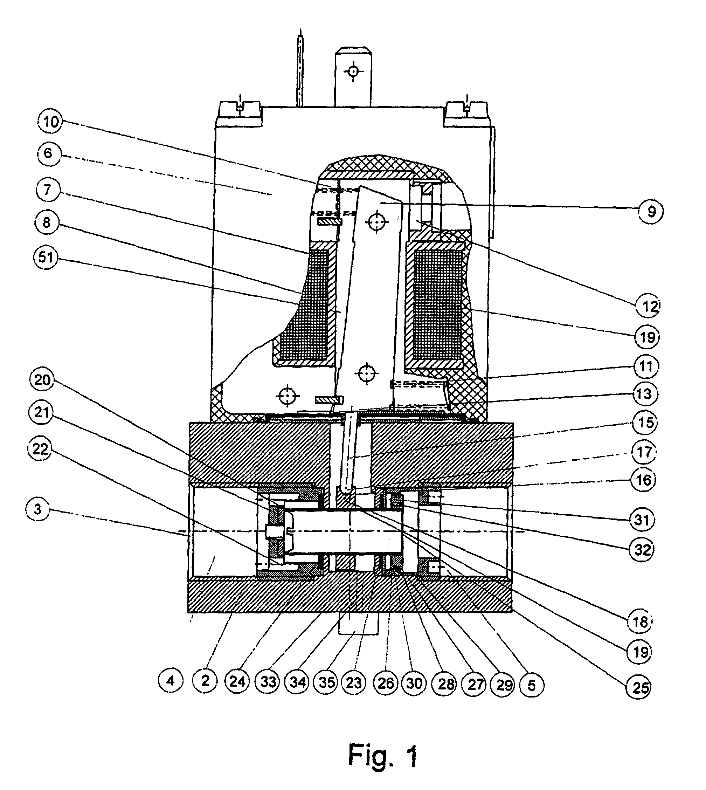

Das in Figur 1 gezeigte Linearventil 1 besteht aus einem Fluidgehäuse 2, das in einer Rohrleitung 3 zwischen zwei Leitungsabschnitten 4, 5 eingepaßt ist, und einem Antriebsgehäuse 6, das einseitig mit einer Antriebseinheit 7 nach oben am Fluidgehäuse 2 angebracht ist. Im Antriebsgehäuse 6 befindet sich eine Spule 8, die einen Klappanker 9 umschließt, der, solange keine Gegenkraft ausgeübt wird, durch die Kraft zweier Federn 10, 11 in seiner Position gehalten wird, bis der Stromkreislauf der Spule 8 geschlossen wird oder mittels einer Handbetätigungseinrichtung 12 gegen die Kraft der Federn 10, 11 der Klappanker 9 aus der gezeigten Position bewegt wird.

An der Unterseite 13 des Klappankers 9 ist ein Verlängerungshebel 14 mit einem Zahnsegment 15 an seinem unteren Ende 16 angebracht, das in einen offenen Zwischenraum 17 des Fluidgehäuses 2 hineinragt und in ein Zahnsegment 18 am Abdichtungsrohr 19 eingreift. In der gezeigten Stellung wird der an das Abdichtungsrohr 19 angedrehte Ventilsitz 20 auf die am Fluidgehäuse 2 dem Ventilsitz 20 gegenüberliegende Ventilsitzdichtung 21 gepreßt und dichtet den Medienstrom durch den Kanal 22 zwischen den Leitungsabschnitten 4, 5 ab.

Durch Betätigen des Klappankers 9 gegen die Kraft der Federn 10, 11 wird das Abdichtungsrohr 19 über das am Klappanker 9 mit dem Verlängerungshebel 14 angebrachte Zahnsegment 15 zurückgeschoben, wodurch der Ventilsitz 20 des Linearventils 1 öffnet. Über den Kanal 22 fließt das Medium vom Leitungsabschnitt 4 durch das Abdichtungsrohr 19 hindurch in den anschließenden Leitungsabschnitt 5. Die Lippendichtungen 23, 24, die das Abdichtungsrohr 19 ringförmig umschließen, dichten das Fluidgehäuse 2 zum Zwischenraum 17 und zum Ankerraum 51 ab.

Dem Ventilsitz 20 gegenüber am Ende 25 des Abdichtungsrohres 19 befindet sich ein Dämpfungsteil 26, mit einem Rechteckquerschnitt 50 und einer Dichtung 28. Bei geschlossenem Linearventil 1 schließt das Dämpfungsteil 26 durch die an seiner Außenseite eingepaßte Dichtung 28 gegen das Fluidgehäuse 2 ab. Bei geöffnetem Linearventil 1 umfließt das Medium das Dämpfungsteil 26 wegen des größeren Querschnitts 29 am Ende des Fluidgehäuses 2.

Das Schließen des Linearventils 1 geschieht druckausgeglichen sehr schnell, zum einen wegen der dünnwandigen Ausführung des Abdichtrohres 19 und zum anderen weil am Dämpfungsteil 26 des Abdichtungsrohres 19 ein Druckausgleich stattfindet, solange sich das Dämpfungsteil 26 im größeren Querschnitt 29 des Fluidgehäuses 2 befindet. Das verdrängte Medium fließt an dem Dämpfungsteil 26 vorbei in den Leitungsabschnitt 5. Tritt das Dämpfungsteil 26 in den engeren Querschnitt 30 des Fluidgehäuses 2 ein, schließt die Dichtung 28 den Spalt 31 umlaufend hermetisch ab. Lediglich durch eine kleine Drosselbohrung 32 im Rechteckquerschnitt 50 kann das Medium aus dem geschlossenen Spalt 31 abfließen, wodurch das Abdichtungsrohr 19 bedämpft schließt.

Vorzugsweise im unteren Teil 33 des Fluidgehäuses 2 führt eine Drainagebohrung 34 aus dem Fluidgehäuse 2 ins Freie. An diese Bohrung 34 werden in der Zeichnung nicht dargestellte Sensorelemente 35 zur Rückmeldung angeschlossen.

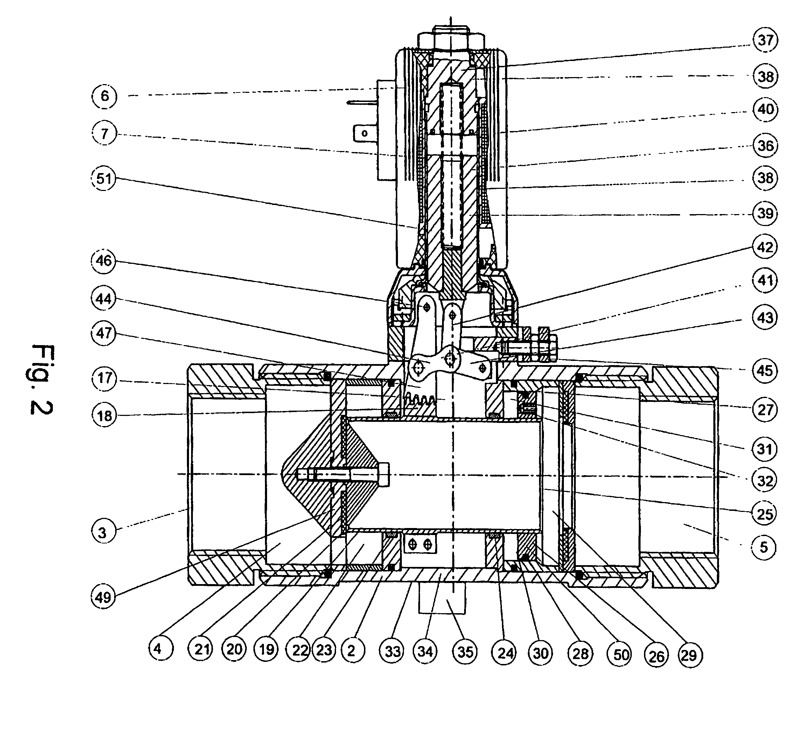

Bei dem Linearventil 1 in Figur 2 dient ein Hubankermagnet 36 als Antriebseinheit 7. Der Hubanker 36 ist in zwei Teilen 38, 39 ausgeführt, die durch eine Feder 40 verbunden sind. Am unteren Teil 39 des Hubankers 37 befindet sich zur Kraftübertragung zwischen dem Antrieb 7 und dem Abdichtungsrohr 19 ein Kniehebel 41, der mit einem Glied 42 am unteren Ende 39 des Hubankers 36 fest und mit einem zweiten Glied 43 am Antriebsgehäuse 6 durch eine Schraube 45 verstellbar eingespannt ist. Ein weiteres Glied 44 des Kniehebels 41 ist über eine Übersetzung 46 derart mit einer Zahnstange 47 verbunden, daß durch das Kraft-Weg-Verhältnis eine vergleichsweise große Kraft auf das Zahnsegment 18 am Abdichtungsrohr 19 übertragen wird.

Die Funktion des in Figur 2 gezeigten Linearventils 1 entspricht ansonsten der in Figur 1 beschriebenen, weshalb auf die dortige Beschreibung verwiesen wird.

## Patentansprüche

1. Direktwirkendes druckentlastetes Linearventil mit einem Fluidgehäuse (2), einem darin angeordneten hohlen verschiebbaren Abdichtungsrohr (19), wobei das Ventil weiters über einen Ventilsitz (20) und einen Ventilkörper (49) mit einer Ventilsitzdichtung (21) verfügt, und eine am Abdichtungsrohr (19) angreifende Antriebseinheit (7), **dadurch gekennzeichnet, daß** die Antriebseinheit (7) als abgeschlossene Baueinheit außerhalb des Medienstroms einseitig neben dem Abdichtungsrohr (19) angeordnet und durch lösbar ineinandergreifende Übertragungsmittel (15, 18) mit dem Abdichtungsrohr (19) gekoppelt ist, so daß die Antriebseinheit (7) ohne Unterbrechung des Medienstroms vom Fluidgehäuse (2) abnehmbar ist.

2. Linearventil nach Anspruch 1, **dadurch gekennzeichnet, daß** die Übertragungsmittel ein Zahnsegment (15) aufweisen, das an einem Verlängerungshebel (14) der Antriebseinheit (7) gebildet ist und in einem offenen Zwischenraum (17) des Fluidgehäuses (2) in ein Zahnsegment (18) am Abdichtungsrohr (19) eingreift.

3. Linearventil nach Anspruch 2, **dadurch gekennzeichnet, daß** der Verlängerungshebel (14) an einem Klappanker (9) der Antriebseinheit (7) angreift.

4. Linearventil nach Anspruch 1, **dadurch gekennzeichnet, daß** ein Kniehebel (41) die Kraft der Antriebseinheit (7) über eine Übersetzung (46) auf ein Zahnsegment (18) am Abdichtungsrohr (19) überträgt.

5. Linearventil nach Anspruch 4, **dadurch gekennzeichnet**, das die auf das Abdichtungsrohr (19) übertragene Schließkraft mit einer Schraube (45), an welcher ein Glied (44) des Kniehebels (41) befestigt ist, justierbar ist.

6. Linearventil nach einem der Ansprüche 1 bis 5, **dadurch gekennzeichnet, daß** für eine Gruppe von Nennweiten einheitliche Antriebseinheiten (7) verwendbar sind.

7. Linearventil nach einem der Ansprüche 1 bis 6, **dadurch gekennzeichnet, daß** die Ventilsitzdichtung (21) im Fluidgehäuse (2) angebracht ist und das Abdichtungsrohr (19) gegenüber der Ventildichtung (21) einen angedrehten Ventilsitz (20) trägt.

8. Linearventil nach einem der Ansprüche 1 bis 7, **dadurch gekennzeichnet, daß** das Abdichtungsrohr (19) dünnwandig und aus Metall gefertigt ist.

9. Linearventil nach einem der Ansprüche 1 bis 7, **dadurch gekennzeichnet, daß** das Abdichtungsrohr (19) dünnwandig und aus Kunststoff gefertigt ist.

10. Linearventil nach einem der Ansprüche 1 bis 9, **dadurch gekennzeichnet, daß** das Abdichtungsrohr (19) von zwei Lippendichtungen (23, 24) umschlossen ist, die einen zur Antriebseinheit (7) hin offenen Zwischenraum (17) vom geschlossenen Fluidgehäuse (2) abtrennen.

11. Linearventil nach einem der Ansprüche 1 bis 10, **dadurch gekennzeichnet, daß** das Abdichtungsrohr (19) am dem Ventilsitz (20) entgegengesetzten Ende (25) ein Dämpfungsteil (26) aufweist, das ringförmig um das Abdichtungsrohr (19) angeordnet ist, einen Rechteckquerschnitt (50) aufweist und mit einer Drosselbohrung (32) sowie einer Ringdichtung (28) versehen ist.

12. Linearventil nach einem der Ansprüche 1 bis 11, **dadurch gekennzeichnet, daß** eine Drainagebohrung (34) an der Unterseite (33) des Fluidgehäuses (2) einen Durchlaß ins Freie bildet.

13. Linearventil nach Anspruch 12, **dadurch gekennzeichnet, daß** durch die Drainagebohrung (34) hindurch ein Sensormodul (35) angeschlossen ist.

14. Linearventil nach einem der Ansprüche 1 bis 13, **dadurch gekennzeichnet, daß** es ohne Eingriff in den Fluidkreislauf von einer Wirkungsweise "antriebslos geschlossen" in eine Wirkungsweise "antriebslos offen" und umgekehrt umschaltbar ist.

## Claims

1. A direct-acting pressure-balanced linear valve, comprising a fluidic housing (2), a hollow, displaceable sealing tube (19) arranged in the fluidic housing (2), the valve being further provided with a valve seat (20) and a valve body (49) having a valve seat seal (21), and a drive unit (7) engaging the sealing tube (19), **characterized in that** the drive unit (7) is arranged as a separate unit outside the media flow on one side and next to the sealing tube (19) and coupled to the sealing tube (19) by means of detachably intermeshing transmission means (15, 18), so that the drive unit (7) may be detached from the fluidic housing (2) without interruption of the media flow.

2. The linear valve according to claim 1, **characterized in that** the transmission means have a toothed segment (15) which is formed at an extension lever (14) of the drive unit (7) and engages with a toothed segment (18) at the sealing tube (19) in an open intermediate space (17) of the fluidic housing (2).

3. The linear valve according to claim 2, **characterized in that** the extension lever (14) engages with a hinged armature (9) of the drive unit (7).

4. The linear valve according to claim 1, **characterized in that** a toggle joint (41) transmits the force of the drive unit (7) by means of a leverage (46) to a toothed segment (18) at the sealing tube (19).

5. The linear valve according to claim 4, **characterized in that** the closing force transmitted to the sealing tube (19) is adjustable by means of a screw (45) to which is fitted a member (44) of the toggle joint (41).

6. The linear valve according to any of the claims 1 to 5, **characterized in that** standardized drive units (7) can be used with a group of rated widths.

7. The linear valve according to any of the claims 1 to 6, **characterized in that** the valve seat seal (21) is arranged in the fluidic housing (2) and the sealing tube (19) carries a turned-on valve seat (20) opposite the valve seal (21).

8. The linear valve according to any of the claims 1 to 7, **characterized in that** the sealing tube (19) is thin-walled and made of metal.

9. The linear valve according to any of the claims 1 to 7, **characterized in that** the sealing tube (19) is thin-walled and made of plastic.

10. The linear valve according to any of the claims 1 to 9, **characterized in that** the sealing tube (19) is surrounded by two lip seals (23, 24) which separate an intermediate space (17), open towards the drive unit (7), from the closed fluidic housing (2).

11. The linear valve according to any of the claims 1 to 10, **characterized in that** the sealing tube (19) has a damping part (26) at the end (25) opposed to the valve seat (20), which damping part (26) is arranged in an annular configuration around the sealing tube (19), is of rectangular cross section (50) and is provided with a choke bore (32) as well as with a ring seal (28).

12. The linear valve according to any of the claims 1 to 11, **characterized in that** a drainage bore (34) at the underside (33) of the fluidic housing (2) provides a passage into the open.

13. The linear valve according to claim 12, **characterized in that** a sensor module (35) is connected through the drainage bore (34).

14. The linear valve according to any of the claims 1 to 13, **characterized in that** it can be switched from a "normally closed" function mode to a "normally open" function mode and vice versa without interference with the fluid circulation.

## Revendications

1. Valve linéaire à action directe et à équilibre de pression, comportant un boîtier de fluide (2), un tube d'étanchéité (19) creux déplaçable, agencé dans ledit boîtier de fluide (2), la valve disposant en outre d'un siège de valve (20) et d'un corps de valve (49) avec un joint de siège de valve (21), et d'une unité d'entraînement (7) engageant le tube d'étanchéité (19), **caractérisée en ce que** l'unité d'entraînement (7) est agencée en tant qu'unité isolée à l'extérieur du flux de fluide à côté du tube d'étanchéité (19) et est accouplée au tube d'étanchéité (19) par des moyens de transmission (15, 18) s'engageant les uns dans les autres de manière détachable, de sorte que l'unité d'entraînement (7) peut être détachée du boîtier de fluide (12) sans interrompre le flux de fluide.

2. Valve linéaire selon la revendication 1, **caractérisée en ce que** les moyens de transmission présentent un segment denté (15) qui est formé sur un levier de rallonge (14) de l'unité d'entraînement (7) et qui s'engage dans un segment denté (18) sur le tube d'étanchéité (19), dans un espace intermédiaire (17) ouvert du boîtier de fluide (2).

3. Valve linéaire selon la revendication 2, **caractérisée en ce que** le levier de rallonge (14) attaque une armature mobile (9) de l'unité d'entraînement (7).

4. Valve linéaire selon la revendication 1, **caractérisée en ce qu'**un levier à genouillère (41) transmet la force de l'unité d'entraînement (7) à un segment denté (18) sur le tube d'étanchéité (19) via une transmission (46).

5. Valve linéaire selon la revendication 4, **caractérisée en ce que** la force de fermeture transmise au tube d'étanchéité (19) est ajustable au moyen d'une vis (45) à laquelle est fixé un élément (44) du levier à genouillère (41).

6. Valve linéaire selon l'une des revendications 1 à 5, **caractérisée en ce que** pour un groupe de sections nominales de passage, on utilise des unités d'entraînement (7) standardisées.

7. Valve linéaire selon l'une des revendications 1 à 6, **caractérisée en ce que** le joint de siège de valve (21) est monté dans le boîtier de fluide (2) et **en ce que** le tube d'étanchéité (19) porte un siège de valve (20) serré par rapport au joint de valve (21).

8. Valve linéaire selon l'une des revendications 1 à 7, **caractérisée en ce que** le tube d'étanchéité (19) est réalisé à paroi mince et en métal.

9. Valve linéaire selon l'une des revendications 1 à 7, **caractérisée en ce que** le tube d'étanchéité (19) est réalisé à paroi mince et en matière plastique.

10. Valve linéaire selon l'une des revendications 1 à 9, **caractérisée en ce que** le tube d'étanchéité (19) est entouré par deux joints à lèvres (23, 24) qui séparent du boîtier de fluide (2) fermé, un espace intermédiaire (17) ouvert vers l'unité d'entraînement (7).

11. Valve linéaire selon l'une des revendications 1 à 10, **caractérisée en ce que** le tube d'étanchéité (19) comporte, à l'extrémité (25) opposée au siège de valve (20), une pièce d'amortissement (26) qui est agencée à la manière d'une bague autour du tube d'étanchéité (19), présente une section transversale rectangulaire (50) et est pourvue d'un orifice d'étranglement (32) ainsi que d'un joint annulaire (28).

12. Valve linéaire selon l'une des revendications 1 à 11, **caractérisée en ce qu'**un orifice de drainage (34) forme un passage vers l'extérieur sur la face inférieure (33) du boîtier de fluide (2).

13. Valve linéaire selon la revendication 12, **caractérisée en ce qu'**un module de capteur (35) est raccordé à travers l'orifice de drainage (34).

14. Valve linéaire selon l'une des revendications 1 à 13, **caractérisée en ce qu'**elle peut être commutée depuis un mode de fonctionnement "fermée sans entraînement" à un mode de fonctionnement "ouverte sans entraînement", et inversement, sans intervenir dans le circuit de fluide.
